# EUROPEAN PATENT APPLICATION

(11) **EP 4 510 409 A1**
(43) Date of publication of application: **19.02.2025**
(21) Application number: 24193129.4
(22) Date of filing: 06.08.2024
(51) Int. Cl.: H02J 3/32, H02J 3/38

(54) **POWER CONVERTER, ENERGY STORAGE POWER SUPPLY SYSTEM, AND POWER OUTPUT METHOD OF POWER CONVERTER**

(30) Priority: 16.08.2023 CN 202311037735
(71) Applicant: Huawei Digital Power Technologies Co., Ltd., Shenzhen, Guangdong 518043 (CN)
(72) Inventor: ZHANG, Meiqing, Shenzhen, Guangdong 518043 (CN); DONG, Mingxuan, Shenzhen, Guangdong 518043 (CN); FANG, Ce, Shenzhen, Guangdong 518043 (CN); XIN, Kai, Shenzhen, Guangdong 518043 (CN)
(74) Representative: Epping - Hermann - Fischer

(57) **Abstract**

This application provides a power converter, an energy storage power supply system, and a power output method of the power converter. The power converter includes a DC/AC conversion unit. A direct current bus is connected to the DC/AC conversion unit and a direct current source. The DC/AC conversion unit is further connected to a power grid. When a direct current bus voltage is less than or equal to a first voltage threshold, the power converter may switch to a current source mode to output first output power to the power grid, where the first output power is equal to an output power limit of the direct current source. Then, if a fluctuation amplitude of the direct current bus voltage is less than or equal to a first fluctuation threshold, the power converter may resume outputting second output power to the power grid in a voltage source mode, so that the second output power is less than or equal to the output power limit of the direct current source. The power converter has a capability of coping with power fluctuation of the power grid, and can effectively support stability of the power grid.

## Description

### TECHNICAL FIELD

This application relates to the field of power electronic devices, and in particular, to a power converter, an energy storage power supply system, and a power output method of the power converter.

### BACKGROUND

An environment and energy crisis is a global problem. New energy such as wind and solar energy becomes an important way to improve an energy structure and resolve an energy problem. A power converter is an important part of a new energy power generation, storage, and utilization solution, and stability of power transmission of the power converter is crucial to safe and efficient operation of an entire new energy power generation, storage, and utilization system.

In an application scenario in which a new energy power generation system and an energy storage power supply system are used in combination, the power converter needs to balance a relationship between a load requirement, a power generation capability of the new energy power generation system, and a charging and discharging capability of the energy storage power supply system. In some application scenarios (for example, a micro-grid), the power converter needs to provide a specific grid construction capability. Therefore, a higher requirement is imposed on design and control of the power converter. In a conventional technology, when power of a stage and power of a previous stage of the power converter do not match, the device is usually shut down for self-protection, or the device continuously operates, but abandons the grid construction capability. In this case, stability of operation of the entire system (for example, the micro-grid) is reduced, and a power demand of a load cannot be continuously and stably met.

### SUMMARY

According to a first aspect, this application provides a power converter. The power converter includes a DC/AC (direct current/alternating current) conversion unit and a direct current bus. A direct current end of the DC/AC conversion unit is connected to the direct current bus. The direct current bus is configured to be connected to a direct current source. An alternating current end of the DC/AC conversion unit is configured to be connected to an external system. The power converter is configured to: if a direct current bus voltage is less than or equal to a first voltage threshold, output first output power to the external system in a current source mode, where the first output power is equal to an output power limit of the direct current source; and after the power converter outputs the first output power to the external system in the current source mode, if a fluctuation amplitude of the direct current bus voltage is less than or equal to a first fluctuation threshold, output second output power to the external system in a voltage source mode, where the second output power is less than or equal to the output power limit of the direct current source.

It should be understood that, when the external system is a power grid, the power converter may provide grid construction support for the power grid by outputting power to the power grid in the voltage source mode, to maintain stability of the power grid. In this case, a power output of the power converter changes with required power of the external system. However, the output power of the power converter is from output power provided by the direct current source of a previous stage. When the required power of the external system fluctuates, if the required power of the external system exceeds maximum power that can be provided by the direct current source, the output power of the power converter exceeds the output power of the direct current source, and the direct current bus voltage between the power converter and the direct current source cannot be maintained stable. As a result, the direct current bus voltage is pulled down. If the direct current bus voltage cannot be effectively controlled, devices of the previous stage and a next stage may be damaged. The power converter provided in this application may switch to the current source mode when the direct current bus voltage is pulled down to a specific value. In this mode, the power converter temporarily abandons a grid construction capability, so that the power output of the power converter changes with a power output capability of the direct current source of the previous stage, to effectively cope with fluctuation of the required power of the external system. In this way, the direct current bus voltage is first restored to being stable and does not continuously decrease, and then the power converter is restored to the voltage source mode after the direct current bus voltage is stable, thereby protecting a safe output of the direct current source of the previous stage when a maximum grid construction capability is maintained.

In a possible implementation, the power converter is specifically configured to: after the first output power is output to the external system in the current source mode, if the fluctuation amplitude of the direct current bus voltage is less than or equal to the first fluctuation threshold, and the required power of the external system decreases to be less than or equal to the output power limit of the direct current source, output the second output power to the external system in the voltage source mode. Alternatively, the power converter is specifically configured to: after the first output power is output to the external system in the current source mode, if the fluctuation amplitude of the direct current bus voltage is less than or equal to the first fluctuation threshold, and the output power limit of the direct current source is increased to be greater than or equal to the required power of the external system, output the second output power to the external system in the voltage source mode.

It should be understood that, to avoid repeated occurrence of a case in which power of the previous stage and power of the next stage do not match, the power converter may further limit a mode switching condition. When it is learned that the power output capability of the direct current source of the previous stage is greater than or equal to the required power of the external system of the next stage, mode switching is performed, or after the mode switching is performed, the output power in the voltage source mode is actively reduced to the output power limit. This can avoid subsequent frequent mode switching.

In a possible implementation, the direct current source is an energy storage apparatus. The power converter is configured to: if the direct current bus voltage is greater than or equal to a second voltage threshold, input first charging power to the energy storage apparatus in the current source mode, where the first charging power is equal to a charging power limit of the energy storage apparatus; and after the power converter inputs the first charging power to the energy storage apparatus in the current source mode, if the fluctuation amplitude of the direct current bus voltage is less than or equal to a second fluctuation threshold, input second charging power to the energy storage apparatus in the voltage source mode, where the second charging power is less than or equal to the charging power limit of the energy storage apparatus.

It should be understood that, like a discharging process, the power converter may effectively cope with fluctuation of supply power of the external system, namely fluctuation of the first charging power, through the mode switching, so that the power converter has a capability of high direct current bus voltage ride through, thereby protecting the energy storage apparatus of the previous stage for safe charging when the maximum grid construction capability is maintained. In a possible implementation, the power converter is specifically configured to: after the first charging power is input to the energy storage apparatus in the current source mode, if the fluctuation amplitude of the direct current bus voltage is less than or equal to the second fluctuation threshold, and charging power of the external system decreases to be less than or equal to the charging power limit of the energy storage apparatus, input the second charging power to the energy storage apparatus in the voltage source mode. Alternatively, the power converter is specifically configured to: after the first charging power is input to the energy storage apparatus in the current source mode, if the fluctuation amplitude of the direct current bus voltage is less than or equal to the second fluctuation threshold, and the charging power limit of the energy storage apparatus is increased to be greater than or equal to charging power of the external system, input the second charging power to the energy storage apparatus in the voltage source mode.

Similarly, in a process of charging an energy storage power supply system by the power converter, the charging power limit of the energy storage apparatus fluctuates with impact of comprehensive factors such as an environment and an operating condition. When the charging power limit of the energy storage apparatus fluctuates upward, that is, the charging power limit of the energy storage apparatus is increased, the power converter may be restored to the voltage source mode to charge the energy storage apparatus, or after switching to the voltage source mode, the power converter actively reduces the charging power below the charging power limit, to provide the grid construction capability for the external system like the power grid.

According to a second aspect, this application further provides an energy storage power supply system, including at least one energy storage apparatus, at least one direct current converter that is correspondingly connected to the energy storage apparatus, and at least one power converter. A direct current end of the power converter is connected to the direct current converter through a direct current bus. The direct current converter is configured to be connected to the energy storage apparatus. An alternating current end of the power converter is configured to be connected to an external system. The power converter is configured to: if a direct current bus voltage is less than or equal to a first voltage threshold, output first output power to the external system in a current source mode, where the first output power is equal to an output power limit of the direct current source; and after the power converter outputs the first output power to the external system in the current source mode, if a fluctuation amplitude of the direct current bus voltage is less than or equal to a first fluctuation threshold, output second output power to the external system in a voltage source mode, where the second output power is less than or equal to an output power limit of the energy storage apparatus. Alternatively, the power converter is configured to: if a direct current bus voltage is greater than or equal to a second voltage threshold, input first charging power to the energy storage apparatus in a current source mode, where the first charging power is equal to a charging power limit of the energy storage apparatus; and after the power converter inputs the first charging power to the energy storage apparatus in the current source mode, if a fluctuation amplitude of the direct current bus voltage is less than or equal to a second fluctuation threshold, input second charging power to the energy storage apparatus in a voltage source mode, where the second output power is less than or equal to an charging power limit of the energy storage apparatus.

It should be understood that, in a two-stage architecture, the direct current bus voltage needs to be cooperatively controlled by the power converter and the direct current converter. When the power converter performs charging and discharging in the voltage source mode, charging and discharging power of the power converter is determined by charging power or output power scheduled by the external system. In this case, charging power input by the direct current converter to the energy storage apparatus or output power output by the direct current converter to the power converter is needed to adaptively perform power matching, to ensure that the direct current bus voltage remains stable. That is, when the power converter provides the output power for the external system in the voltage source mode, the direct current converter is responsible for controlling the direct current bus voltage, and provides the output power for the power converter in a direct current bus voltage control mode. The direct current converter provides as much output power as the power converter needs, to maintain stability of the direct current bus voltage. However, when a power output capability of the direct current converter is limited and cannot meet a power output requirement of the power converter, if the direct current converter continues to operate in this operating mode, the direct current bus voltage decreases. If mode switching is not performed, the direct current bus voltage is pulled below a warning value, causing damage to a device. Therefore, when the power output capability of the direct current converter cannot meet the power output requirement of the power converter, the operating mode needs to be switched, for example, the direct current converter switches to a power limiting mode. In this case, the output power of the direct current converter is not intended to maintain the stability of the direct current bus voltage, but is to set an output power limit (the output power limit may change due to factors such as an environment and an operating condition) by evaluating the power output capability of the direct current converter and/or a power output capability of the energy storage apparatus of a previous stage. The power converter supplies power to the external system in the current source mode. In this case, a power output of the power converter is not determined to meet a power scheduling requirement of the external system, but is intended to control the stability of the direct current bus voltage. That is, in this case, the direct current bus voltage is controlled by the power converter, and the output power of the power converter needs to be determined by the output power of the direct current converter of the previous stage. The power converter outputs as much power as the direct current converter provides, to maintain the stability of the direct current bus voltage. A process of charging the energy storage apparatus by the external system is similar. Details are not described herein again.

According to a third aspect, this application further provides a power output method of a power converter, including: if a direct current bus voltage of a direct current bus that is connected to a direct current input end of a DC/AC (direct current/alternating current) conversion unit of the power converter is less than or equal to a first voltage threshold, outputting first output power to the external system in a current source mode, where the first output power is equal to an output power limit of a direct current source that is connected to the power converter; and after the first output power is output to the external system in the current source mode, if a fluctuation amplitude of the direct current bus voltage is less than or equal to a first fluctuation threshold, outputting second output power to the external system in a voltage source mode, where the second output power is less than or equal to the output power limit of the direct current source.

In a possible implementation, the outputting second output power to the external system in a voltage source mode after the first output power is output to the external system in the current source mode, and if a fluctuation amplitude of the direct current bus voltage is less than or equal to a first fluctuation threshold, includes: after the first output power is output to the external system in the current source mode, if the fluctuation amplitude of the direct current bus voltage is less than or equal to the first fluctuation threshold, and required power of the external system decreases to be less than or equal to the output power limit of the direct current source, outputting the second output power to the external system in the voltage source mode; or after the first output power is output to the external system in the current source mode, if the fluctuation amplitude of the direct current bus voltage is less than or equal to the first fluctuation threshold, and the output power limit of the direct current source is increased to be greater than or equal to required power of the external system, outputting the second output power to the external system in the voltage source mode.

In a possible implementation, if the direct current bus voltage is greater than or equal to a second voltage threshold, inputting, in the current source mode, first charging power to an energy storage apparatus that is connected to the power converter, where the first charging power is equal to a charging power limit of the energy storage apparatus; and after the first charging power is input to the energy storage apparatus in the current source mode, if the fluctuation amplitude of the direct current bus voltage is less than or equal to a second fluctuation threshold, inputting second charging power to the energy storage apparatus in the voltage source mode, where the second charging power is less than or equal to the charging power limit of the energy storage apparatus.

In a possible implementation, the inputting second charging power to the energy storage apparatus in the voltage source mode after the first charging power is input to the energy storage apparatus in the current source mode, and if the fluctuation amplitude of the direct current bus voltage is less than or equal to a second fluctuation threshold includes: after the first charging power is input to the energy storage apparatus in the current source mode, if the fluctuation amplitude of the direct current bus voltage is less than or equal to the second fluctuation threshold, and charging power of the external system decreases to be less than or equal to the charging power limit of the energy storage apparatus, inputting the second charging power to the energy storage apparatus in the voltage source mode; or after the first charging power is input to the energy storage apparatus in the current source mode, if the fluctuation amplitude of the direct current bus voltage is less than or equal to the second fluctuation threshold, and the charging power limit of the energy storage apparatus is increased to be greater than or equal to charging power of the external system, inputting the second charging power to the energy storage apparatus in the voltage source mode.

### BRIEF DESCRIPTION OF DRAWINGS

FIG. 1(a) to FIG. 1(e) are a diagram of a usage scenario of a power converter according to an embodiment of this application;
FIG. 2 is a diagram of controlling high and low direct current bus voltage ride through by a power converter according to an embodiment of this application;
FIG. 3 is a diagram of controlling high and low direct current bus voltage ride through by a power converter according to an embodiment of this application;
FIG. 4 is a diagram of controlling high and low direct current bus voltage ride through by a power converter according to an embodiment of this application;
FIG. 5 is a diagram of a principle of controlling high and low direct current bus voltage ride through by a power converter according to an embodiment of this application;
FIG. 6 is a flowchart of a power converter control method according to an embodiment of this application; and
FIG. 7 is a flowchart of a power converter control method according to an embodiment of this application.

### DESCRIPTION OF EMBODIMENTS

The technical solutions provided in this application are applicable to a plurality of application fields such as a photovoltaic power generation field and wind power generation, and may be specifically applied to a plurality of scenarios such as a photovoltaic or wind power generation system, an energy storage power supply system, and a micro-grid, and a plurality of power conversion devices such as a photovoltaic inverter and an energy storage converter.

This application imposes no limitation on the application field, the specific application scenario, and the device of the technical solutions.

In a scenario in which a new energy power generation system performs grid connection or constructs a micro-grid, power scheduling performed by a power grid on the power generation system often fluctuates. When a power scheduling amplitude exceeds a bearing range of the power generation system, the power generation system may be damaged. In this case, a self-protection function of the power generation system may be triggered, so that the power generation system is temporarily shut down and stops operating, thereby avoiding a breakdown of a small system caused by fluctuation of a large power grid. However, in this processing method, generated power that can be provided by the power generation system to the power grid is lost. In addition, because the power generation system is shut down and the power grid is disconnected, grid construction support received by the power grid is reduced, and instability of the power grid is caused. The technical solutions provided in this application can effectively resolve the foregoing problem. According to a power converter, an energy storage power supply system, and a power converter control method described in the following embodiments, when a charging and discharging capability of the energy storage power supply system does not match required power of a load, the power converter may switch a power supply mode, so that the power converter has a function of transient-state low and high direct current bus voltage ride through, and the power converter quickly restores a grid construction capability on a premise of considering matching between power of a previous stage and power of a next stage. In this process, the power converter can continuously maintain the system to supply power to the power grid, and the power converter can maintain as much as possible the grid construction capability that maintains stability of the power grid.

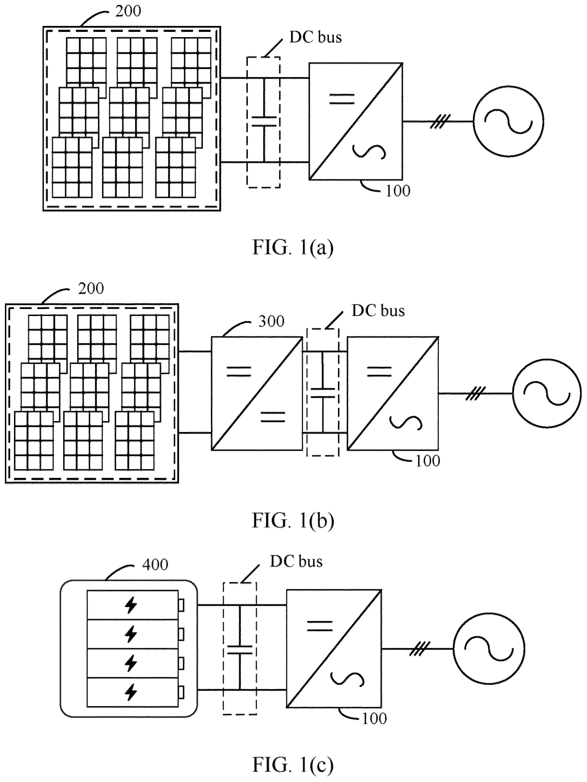

FIG. 1(a) to FIG. 1(e) in the accompanying drawings for this specification are diagrams of architectures of an application scenario in which an embodiment of this application is applied to a photovoltaic power generation system. FIG. 1(a) shows a photovoltaic power supply system with a single-stage architecture in a pure solar power generation scenario. A power converter 100 may be connected to a solar panel 200. It should be noted that the solar photovoltaic panel 200 herein may be a photovoltaic string formed by connecting a plurality of solar panels in series and in parallel. The power converter 100 may include only a DC/AC conversion unit, or a DC/DC (direct current/direct current) conversion unit is configured before the DC/AC conversion unit, and the power converter 100 is connected to a direct current bus by using the DC/DC conversion unit. The power converter 100 may convert a direct current output by the solar panel 200 into an alternating current, and provide the alternating current for an external system. The external system herein may be a load, or may be a power grid. The power grid may be an independent small micro-grid, or may be a large power grid connected to another power supply system. FIG. 1(b) shows a photovoltaic power supply system with a two-stage architecture in a pure solar power generation scenario. A direct current converter 300 may be connected between the power converter 100 and the solar panel 200. In the two-stage architecture, a current and a voltage that are output by the solar panel 200 may be first converted by the direct current converter 300 and then output to the power converter 100. The system can adapt to a larger range of a current and voltage output of the solar panel 200.

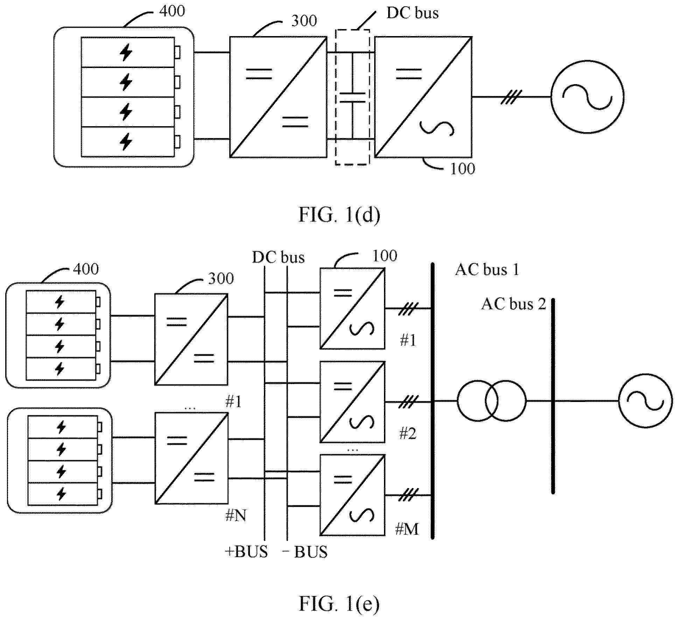

In addition to application of the power converter 100 in the pure solar scenario, the power converter 100 provided in this embodiment of this application may further be applied to an energy storage power supply system. As shown in FIG. 1(c) that shows an energy storage power supply system with a single-stage architecture, the power converter 100 is connected to the energy storage apparatus 400 through the direct current bus DC Bus. Further, the power converter 100 may further be applied to an energy storage power supply system with a two-stage architecture. As shown in FIG. 1(d), the power converter 100 is first connected to the direct current converter 300 through the direct current bus DC Bus, and the direct current converter 300 is connected to the energy storage apparatus 400. In the foregoing single-stage or two-stage architecture of the energy storage power supply system, the power converter 100 may convert a direct current provided by the energy storage apparatus 400 into an alternating current, and provide the alternating current for the power grid, or may convert an alternating current of the power grid into a direct current, and provide the direct current for the energy storage apparatus 400, to charge the energy storage apparatus 400. Similarly, the power grid herein may be the micro-grid or the large power grid. Similarly, in the energy storage power supply system with the two-stage architecture, because a power regulation unit is added, a power matching range of the energy storage apparatus 400 and the power converter 100 is larger, and system adjustment is more flexible. It may be understood that, in the energy storage power supply system, there may be a plurality of energy storage apparatuses 400, a plurality of power converters 100 may be configured, and a plurality of direct current converters 300 may be configured between the plurality of power converters 100 and the plurality of energy storage apparatuses. Refer to FIG. 1(e). One direct current converter 300 is configured by matching for each of the plurality of energy storage apparatuses. The direct current converters are connected to the plurality of power converters 100 through the direct current bus DC Bus. Energy flow between the energy storage apparatus and the power grid is implemented by power control and adjustment of the power converter 100 and the direct current converter 300.

Further refer to FIG. 1(e) in the accompanying drawings for this specification. A plurality of energy storage apparatuses 400 are connected to the direct current bus DC Bus by using the direct current converters 300 corresponding to the energy storage apparatuses 400. The power converter 100 is connected to the direct current bus DC Bus and the power grid. The plurality of energy storage apparatuses 400 may supply power to the power grid together, and may simultaneously receive charging power input by the power grid. When a direct current bus DC Bus voltage fluctuates due to fluctuation of power scheduling performed by the power grid, the direct current converters 300 corresponding to all the energy storage apparatuses 400 and all the power converters 100 may cooperatively perform mode switching, to maintain stability of the direct current bus DC Bus voltage.

In the foregoing various power supply architectures, a direct current received by the power converter 100 may be directly from the energy storage apparatus 400 or the solar panel 200, or the direct current of the energy storage apparatus 400 or the solar panel 200 is converted by the direct current converter 300 and then output to an input end of the power converter 100. In any architecture, a voltage of the input end of the power converter 100, usually the direct current bus DC Bus voltage, needs to remain in an input voltage range that the power converter 100 can bear, to avoid a case in which an input voltage exceeds a voltage regulation capability of the power converter 100, and consequently the power converter 100 cannot effectively provide a voltage output for the power grid, a voltage of the power grid fluctuates, and user experience of power consumption deteriorates.

In actual application, when various power supply systems are configured, power output capabilities of the solar panel and the energy storage apparatus are designed to match the power converter, and power that needs to be scheduled by the power grid is also adaptively matched. A power supply capability of a previous stage of the power converter usually matches required power of a next stage, and does not exceed a power regulation capability of the power converter. However, due to a change in the weather, a change of remaining power of the energy storage apparatus, and the like, the power supply capability of the previous stage of the power converter may be reduced. If the required power of the next stage continues to maintain original required power or increases by a specific amplitude, the power supply capability of the previous stage may not match the required power of the next stage. If the power converter continues to maintain an output meeting the required power of the next stage, and supply power of the previous stage cannot keep up with the output, a bus voltage of the previous stage decreases. When the bus voltage decreases and exceeds an adjustment range of the power converter, the power converter cannot continue to effectively supply stable power to the power grid, and a power device may be damaged in a severe case.

Similarly, in the energy storage power supply system, when the power grid has surplus power for continuously charging the energy storage apparatus by using the power converter, and a power storage capability of the energy storage apparatus is limited, if the energy storage apparatus continues to be charged after the energy storage apparatus is fully charged, the bus voltage of the previous stage of the power converter increases and exceeds a preset bus voltage range, and the power device and an energy storage battery may be damaged.

In an embodiment provided in this application, refer to FIG. 1(a) to FIG. 1(e) in the accompanying drawings for this specification. The power converter 100 includes one DC/AC conversion unit that may perform direct current-to-alternating current conversion to convert a direct current provided by a direct current source (for example, the energy storage apparatus 400 or the solar panel 200) into an alternating current and provide the alternating current for the power grid, or may perform alternating current-to-direct current conversion to convert an alternating current provided by the power grid into a direct current and provide the direct current for the direct current source (when the direct current source is the energy storage apparatus 400). One end of the DC/AC conversion unit is connected to the direct current bus DC Bus, the direct current bus DC Bus is connected to the direct current source, and the other end of the DC/AC conversion unit is connected to the power grid. An example in which the energy storage apparatus 400 is used as the direct current source to supply power is used. Generally, the power converter 100 supplies power to the power grid in a voltage source mode. In the voltage source mode, a voltage and power provided by the power converter are determined by a voltage and power requirement allocated by the power grid to the power converter 100. For example, the power grid has a power requirement of 1000 kW, and another power supply system in the power grid already supplies power of 800 kW to the power grid. In this case, the power converter 100 needs to extract power of 200 kW from the previous stage and output the power to the power grid. If only power of 180 kW can be output because the power output capability of the energy storage apparatus 400 of the previous stage is reduced, there is a power difference of 20 kW between a power requirement of the next stage and a power supply of the previous stage. To make up for the power difference, a bus capacitor on the direct current bus DC Bus of the power converter 100 releases stored electric energy, and consequently a voltage of the bus capacitor decreases, that is, an input voltage of the power converter 100 decreases. In this case, the power converter 100 needs to adjust a voltage regulation mode of the power converter 100 to convert the input voltage into an output voltage meeting a requirement of the power grid. When a power input of the previous stage is continuously insufficient, the direct current bus voltage continuously decreases, the voltage regulation mode of the power converter 100 continuously fluctuates, and consequently an output voltage of the next stage is unstable. In addition, when the bus voltage decreases and exceeds a preset input voltage range of the power converter, the power converter 100 cannot operate normally, and may be damaged. Because power of the energy storage apparatus 400 of the previous stage is continuously extracted to a maximum degree, the energy storage apparatus 400 of the previous stage may also be damaged. This is not conducive to supplying power to the power grid stably for a long time by the energy storage power supply system. In a technical solution provided in this application, input power received by the power converter 100 is direct current power output by the direct current source of the previous stage. In the voltage source mode (Voltage Source Mode, VS Mode), the power converter 100 first converts the direct current into the alternating current, and converts the direct current power into alternating current power for the power grid based on a direct current-to-alternating current function. The power converter 100 may be an inverter or a converter in actual application, and usually has a current and voltage sampling module. If a sampled direct current bus voltage is less than or equal to a specific voltage threshold, for example, a first voltage threshold that is 1200 V, the power converter 100 may switch to output first output power to the power grid in a current source mode (Current Source Mode, CS Mode). When providing output power for the power grid in the current source mode, the power converter 100 does not provide the output power for the power grid based on a scheduling requirement of the power grid, but determines a power output of the power converter 100 based on a power output capability of the direct current source of the previous stage. In this case, an output of the power converter 100 does not exceed the power output capability of the direct current source of the previous stage, and therefore the bus voltage does not continuously decrease and exceed the preset range. This ensures stable power supply of the energy storage power supply system. It should be understood that, for systems that supply power to the power grid, more systems that supply power in the voltage source mode indicate that the power grid is more stable. Therefore, the power converter 100 needs to switch from the current source mode to the voltage source mode under an appropriate condition, to improve stability of the power grid.

In a period of the current source mode, if the direct current bus DC Bus voltage does not fluctuate, or a fluctuation amplitude is less than or equal to a first fluctuation threshold, it indicates that the power converter 100 has effectively stabilized the direct current bus DC Bus voltage in the current source mode, and the direct current bus DC Bus voltage does not continue to decrease. In this case, the power converter 100 may switch to the voltage source mode to provide grid construction support. Generally, because the power output has been reduced in the current source mode, the power grid or the load may choose to receive a lacking power input from another place or actively reduce the power requirement to adapt to the power supply of the power converter 100 in the current source mode. When the power converter 100 is restored to the voltage source mode, the power grid or the load does not require excessively high output power, second output power provided by the power converter 100 in the voltage source mode usually does not exceed the power output capability of the previous stage, and the direct current bus voltage does not decrease. Therefore, the power converter 100 may resume outputting the second output power to the power grid in the voltage source mode.

The example in which the energy storage apparatus 400 is used as the direct current source to supply power is used. At first, the power converter 100 usually operates in the voltage source mode, and alternating current power output by the power converter 100 to the power grid is determined by required power scheduled by the power grid. When the required power scheduled by the power grid fluctuates, for example, the required power increases, the alternating current power output by the power converter 100 increases. When the output alternating current power exceeds output power that can be provided by the energy storage apparatus 400 at the previous stage of the power converter 100, there is a mismatch between the power of the previous stage and the power of the next stage, and consequently undervoltage occurs on the direct current bus DC Bus. When the direct current bus DC Bus voltage reaches a bus voltage lower limit UbusDnLmt of the direct current bus DC Bus, the power converter 100 starts a direct current undervoltage fault ride through process, and switches from the voltage source mode to the current source mode. In this case, the first output power output by the power converter 100 is determined by direct current power provided by the energy storage apparatus 400 of the previous stage, and the power converter 100 can match the output power of the previous stage to determine the output power of the power converter 100, so that the direct current bus DC Bus voltage does not continue to decrease. This prevents the power supply system from breaking down and being directly disconnected from the power grid. After the direct current bus DC Bus voltage is stable, the power converter 100 may be controlled to resume operating in the voltage source mode, so that the direct current bus DC Bus voltage is restored to a normal value UbusNorm. In this way, the direct current undervoltage fault ride through process of the power converter 100 is completed.

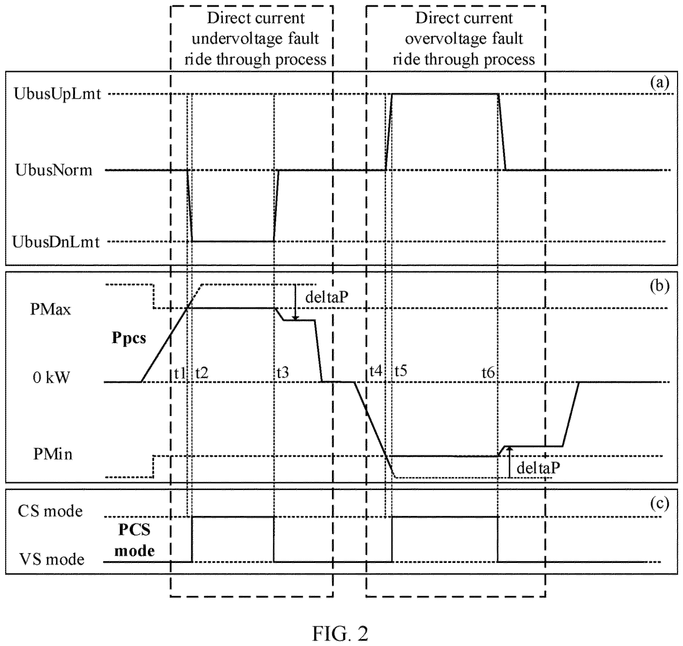

For a mode switching process of the power converter 100, refer to FIG. 2 in the accompanying drawings for this specification. At first, the power converter 100 operates in the voltage source mode VS Mode, and the output power of the power converter 100 changes with the requirements of the power grid or the load. When the required power increases, the output power Ppcs of the power converter 100 gradually increases. At first, the direct current bus DC Bus voltage may be maintained in a normal range UbusNorm. However, when the output power Ppcs of the power converter 100 further increases, the power output capability of the direct current source (for example, the energy storage apparatus 400) of the previous stage may be insufficient, that is, at a time t1, the output power Ppcs of the power converter 100 continues to increase, and actually the direct current source has reached an output power limit PMax of the direct current source. In this case, the output power Ppcs of the power converter 100 exceeds the PMax, and the excess power is provided by some energy storage elements (for example, the capacitor on the direct current bus DC Bus, not shown in the figure). As a result, the direct current bus DC Bus voltage decreases until the direct current bus DC Bus voltage reaches the UbusDnLmt at a time t2, and the power converter 100 switches to the current source mode CS Mode to output power. In this case, the output power Ppcs of the power converter 100 does not change with the required power, but changes with a power output of the direct current source of the previous stage. For example, the direct current source of the previous stage continues to keep outputting power at the output power limit PMax, and the output power Ppcs of the power converter 100 does not continue to increase (a dashed line part of an output power Ppcs curve indicates that the required power is still increasing), but follows the direct current source of the previous stage and outputs power based on the output power limit PMax of the direct current source of the previous stage, so that the direct current bus DC Bus voltage is maintained at the UbusDnLmt and does not continue to decrease. After the direct current bus DC Bus voltage is stable for a period of time, at a time t3, the power converter 100 may switch to the voltage source mode VS Mode to output power. A principle of a process of controlling high direct current bus DC Bus voltage ride through in a process of charging the energy storage apparatus 400 by the power converter 100 in a second half of FIG. 2 is similar. Details are not described herein again.

Further, when the power converter 100 is restored from the current source mode to the voltage source mode to supply power to the power grid, that a fluctuation amplitude of the direct current bus DC Bus voltage in the current source mode is less than or equal to the first fluctuation threshold is considered, and the required power of the power grid or the load and the output power limit of the direct current source are considered.

It should be understood that, as an important device in a power grid system, the power converter 100 usually has a communication capability and a basic operation and data processing capability. The communication capability may be implemented in a wired communication or wireless communication manner. The operation and data processing capability may be implemented by using a functional chip in the power converter 100. A specific manner of implementing the communication capability, the data processing capability, and the like is not limited in embodiments of this application. For example, a controller in the power converter 100 may evaluate the power output capability of the direct current source of the previous stage based on the output power that is of the direct current source of the previous stage and that is received in a previous period of time. When the direct current source has a calculation and communication function, the direct current source may directly notify the power converter 100 of the power output capability of the direct current source. For example, the energy storage apparatus 400 may have various temperature detection, and voltage and current detection units that can detect a status of an energy storage battery in the energy storage apparatus 400. Detection data is collected by a data processing unit in the energy storage apparatus 400, and is transmitted to the power converter 100 by using a communication unit of the energy storage apparatus 400. The power converter 100 may evaluate an output power limit of the energy storage apparatus 400 based on received data information of the energy storage apparatus 400, to determine whether to be restored to the voltage source mode. For example, in a time period, when the output power limit of the direct current source is increased to be greater than or equal to the required power of the power grid, or the required power of the power grid decreases to be less than or equal to the output power limit of the direct current source, the power converter 100 may switch to the voltage source mode. Switching in this case can avoid switching to the current source mode, and reduce a probability of switching between the modes.

Similarly, in the two-stage architecture, the power converter 100 further needs to evaluate the power output capability of the energy storage apparatus 400, and may simultaneously consider the power output capability of the direct current converter 300 of the previous stage. Certainly, the power output capability of the direct current converter 300 is usually strong, and the output power limit of the direct current converter 300 is usually determined by the output power limit of the energy storage apparatus 400 of the previous stage. In the architecture, the energy storage apparatus 400 may directly communicate with the power converter 100, or may communicate with the power converter 100 by using the direct current converter 300.

The example in which the energy storage apparatus 400 is used as the direct current source is used herein for description. In actual application, a principle of using the solar panel 200 as the direct current source is basically the same, but specific signal detection and information communication are different. Using the solar panel 200 as the direct current source is also a technical means commonly used by a person skilled in the art, and details are not described herein again. A process that is of scheduling charging power to charge the energy storage apparatus 400 by the power grid and that is described in the following embodiments is similar, and a power capability of the energy storage apparatus 400 may also be evaluated similarly. In the two-stage architecture, a power input capability, the power output capability, and the like of the direct current converter 300 are also evaluated, and specific factors considered are similar. Details are not described below.

In some possible implementations, an instantaneous output power value, namely transient-state power Pts, to be borne by the power converter 100 during mode switching and steady-state power Pss obtained after the power converter 100 is stable in a new operating mode need to be considered. If both the transient-state power Pts and the steady-state power Pss fall within an output power limit range of the direct current source, mode switching may be performed. It should be understood that the steady-state power Pss is usually determined by the required power of the power grid or the load. Although the transient-state power Pts may instantaneously exceed the output power limit of the direct current source, because the time is usually short, if the energy storage apparatus 400 and the power converter 100 (and the direct current converter 300) have a strong capability of resisting power fluctuation, the transient-state power Pts may be allowed to occur in a short time, or the transient-state power Pts may be allowed to exceed the output power limit of the direct current source by a specific threshold range.

It should be noted that, in some cases, although the required power of the power grid or the load is greater than the output power limit of the direct current source of the previous stage, that is, the steady-state power Pss that needs to be borne after the power converter 100 switches from the current source mode to the voltage source mode may be greater than the output power limit of the direct current source of the previous stage, the power converter 100 may still actively switch to the voltage source mode. However, in this case, the second output power of the power converter 100 further needs to be controlled to be less than or equal to the output power limit of the direct current source. For example, although the power converter 100 has switched to the voltage source mode to supply power to the power grid, because the power output capability of the previous stage is limited, the power converter 100 may control the output power of the power converter 100 in the voltage source mode to remain in a power output capability range of the direct current source of the previous stage. For another example, the power output capability of the direct current source of the previous stage may fluctuate at any time. To avoid switching between the modes in a short time, the power converter 100 may further reduce maximum output power in the voltage source mode, so that the output power of the power converter 100 keeps being in the output power limit range of the direct current source of the previous stage. As shown in FIG. 2, when the power converter 100 switches to the voltage source mode VS Mode, the output power Ppcs of the power converter 100 is further controlled to decrease by deltaP relative to the required power of the power grid, so that the output power Ppcs of the power converter 100 keeps being maintained below the output power limit PMax of the direct current source of the previous stage. The principle of the process of controlling the high direct current bus DC Bus voltage ride through in the process of charging the energy storage apparatus 400 by the power converter 100 described in the second half of FIG. 2 is similar. Details are not described herein again.

The foregoing embodiment describes a case in which the power converter 100 supplies power to the power grid. The following describes a case in which the power converter 100 obtains power from the power grid to charge the energy storage apparatus 400. In the energy storage power supply system, if the power grid has surplus power, and the energy storage apparatus 400 of the energy storage power supply system also has a surplus power storage capability, the power grid may schedule the surplus power to supply power to the energy storage power supply system with surplus energy storage space. In this case, a function of the power converter 100 is to convert an alternating current input by the power grid into a direct current and input the direct current to the energy storage apparatus 400.

In a possible implementation, the power converter 100 first converts alternating current power provided by the power grid into direct current power and inputs the direct current power to the energy storage apparatus 400 in the voltage source mode. In this case, alternating current power input by the power converter 100 is determined by charging power scheduled by the power grid. When a charging power receiving capability of the energy storage apparatus 400 is insufficient, for example, remaining energy storage space of the energy storage apparatus 400 is insufficient, in other words, the energy storage apparatus 400 is close to a full state, charging power input by the power converter 100 is greater than power that can be received by the energy storage apparatus 400, and therefore the direct current bus DC Bus voltage increases. If the direct current bus voltage exceeds a specific threshold, for example, is greater than or equal to a second voltage threshold, the power converter 100 may switch to the current source mode to input first charging power to the energy storage apparatus 400. In this case, the first charging power is determined by the charging power receiving capability of the energy storage apparatus 400, the first charging power matches power received by the energy storage apparatus 400, and the direct current bus DC Bus voltage does not continue to increase and can remain stable. When required charging power scheduled by the power grid is less than a charging power limit of the energy storage apparatus, the power converter 100 may resume charging the energy storage apparatus 400 in the voltage source mode, to improve a grid construction capability of the energy storage power supply system and improve the stability of the power grid.

For the mode switching process of the power converter 100, refer to FIG. 2 in the accompanying drawings for this specification. At first, the power converter 100 usually operates in the voltage source mode, and the charging power input by the power converter 100 to the energy storage apparatus 400 is determined by the charging power receiving capability of the energy storage apparatus 400. When the required charging power scheduled by the power grid fluctuates, for example, the power grid suddenly has redundant power to be charged into the energy storage power supply system, the charging power of the power converter 100 increases. When the charging power exceeds the charging power that can be received by the energy storage apparatus 400, there is the mismatch between the power of the previous stage and the power of the next stage, and consequently overvoltage occurs on the direct current bus DC Bus. When the direct current bus DC Bus voltage reaches a bus voltage upper limit UbusUpLmt of the direct current bus DC Bus, the power converter 100 starts a direct current overvoltage fault ride through process, and switches from the voltage source mode to the current source mode. In this case, the first charging power output by the power converter 100 is determined by the charging power receiving capability of the energy storage apparatus 400, and the power converter 100 can match the power of the previous stage and the power of the next stage, that is, the first charging power output by the power converter 100 is equal to the charging power limit of the energy storage apparatus 400, so that the direct current bus DC Bus voltage does not continue to increase. This prevents the power supply system from breaking down and being directly disconnected from the power grid. After the direct current bus DC Bus voltage is stable, the power converter 100 may be controlled to resume operating in the voltage source mode, so that the direct current bus DC Bus voltage is restored to the normal value UbusNorm. In this way, the direct current overvoltage fault ride through process of the power converter 100 is completed.

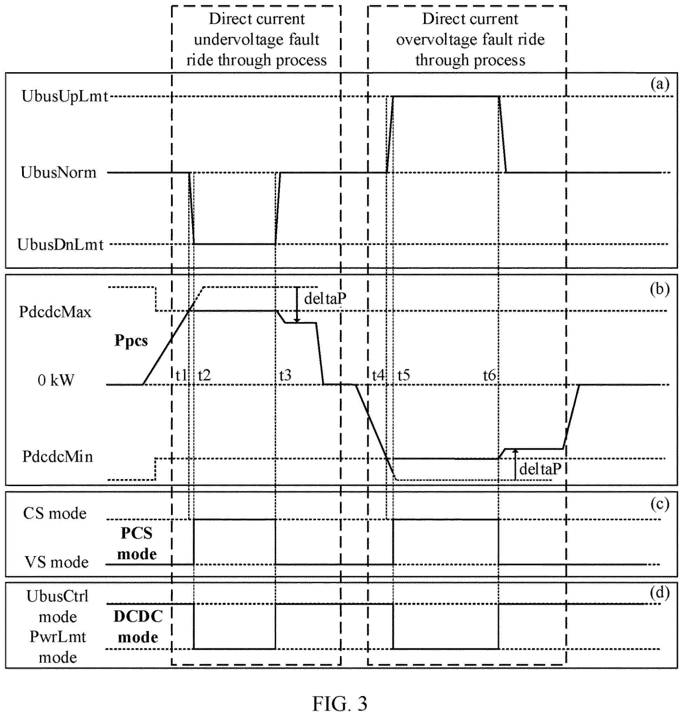

In the two-stage architecture in which the direct current converter 300 is configured between the energy storage apparatus 400 and the power converter 100, the direct current converter 300 and the power converter 100 cooperate with each other to simultaneously perform the mode switching, to perform an action of high and low direct current bus voltage fault ride through. As shown in FIG. 3, when the power converter 100 operates in the voltage source mode, the direct current converter 300 performs control in a direct current bus control mode UbusCtrl Mode, and direct current power output by the direct current converter 300 adaptively changes with the alternating current power output by the power converter 100, to ensure that the direct current bus DC Bus voltage is stable at the normal value UbusNorm. When the requirement of the power grid fluctuates, and low direct current bus voltage ride through needs to be performed, the power converter 100 enters the current source mode, and the direct current converter 300 enters a power limiting mode PwrLmt Mode. Direct current power to be output by the direct current converter 300 to the power converter 100 is determined by the output capability of the energy storage apparatus 400. The alternating current power output by the power converter 100 adaptively changes with the direct current power output by the direct current converter 300, to prevent the direct current bus DC Bus voltage from continuing to decrease, that is, the first output power output by the power converter 100 may be equal to the output power limit of the energy storage apparatus 400. After the direct current bus DC Bus voltage is stable, the power converter 100 switches to the voltage source mode in a timely manner, and the direct current converter 300 switches to the bus control mode UbusCtrl Mode. In addition, the first output power output by the power converter 100 is less than or equal to the output power limit of the energy storage apparatus 400. In this way, the low direct current bus voltage ride through occurring when the entire energy storage power supply system copes with short-time fluctuation of the power grid is completed. In a process of the high direct current bus voltage ride through occurring when the power grid charges the energy storage apparatus 400, cooperative mode switching of the power converter 100 and the direct current converter 300 is similar. Details are not described herein again.

Further, when the power converter 100 is restored from the current source mode to the voltage source mode to input second charging power to the energy storage apparatus 400, the power converter 100 may further actively control the second charging power to be less than or equal to the charging power limit of the energy storage apparatus 400. For example, although the power converter 100 has switched to the voltage source mode to input the second charging power to the energy storage apparatus 400, because the charging power receiving capability of the energy storage apparatus may fluctuate again, to avoid switching between the modes in a short time, the power converter 100 may set a charging power limit for the power converter 100, so that the charging power of the power converter 100 keeps being in a charging power receiving capability range of the energy storage apparatus 400 of the previous stage. In this case, the power grid may schedule the surplus power to another energy storage power supply system, so that the another energy storage power supply system with larger energy storage space receives more charging power. In this way, the power converter 100 can continuously charge the energy storage power supply system in the voltage source mode, to improve the stability of the power grid.

According to the foregoing embodiment, an operating mode and the output alternating current power or the input direct current power of the power converter 100 are adjusted based on the output power limit or the charging power limit of the energy storage apparatus 400 as a reference, so that the power converter 100 can have a capability of high and low voltage ride through when the bus voltage is excessively high or low due to fluctuation of the power scheduled by the power grid. It should be understood that, in some cases, in a process in which the power scheduled by the power grid fluctuates, a power outputting capability or a power receiving capability of the energy storage power supply system may change and adapt to the fluctuation of the power scheduled by the power grid. In this case, the energy storage power supply system may be restored to the voltage source mode as soon as possible to participate in grid construction, to the improve stability of the power grid.

In some cases, in a process in which the power converter 100 converts the direct current power of the direct current source (for example, the energy storage apparatus 400 or the solar panel 200) into the alternating current power and outputs the alternating current power to the power grid in the voltage source mode, if the direct current bus voltage decreases to be less than or equal to the first voltage threshold, it indicates that discharging power of the energy storage apparatus 400 or the solar panel 200 cannot keep up with the output power of the power converter 100, and the power converter 100 switches to the current source mode to output the first output power to the power grid. If the output power limit of the direct current source is increased in a process of outputting the first output power to the power grid in the current source mode, for example, a power generation capability of the solar panel 200 is improved or a discharging capability of the energy storage apparatus 400 is improved, and the increased output power limit is greater than or equal to the required power of the power grid, that is, the increased output power limit is greater than or equal to the second output power that needs to be output to the power grid after the power converter 100 switches to the voltage source mode, the power converter 100 may resume outputting the second output power to the power grid in the voltage source mode in advance.

Similarly, in a process in which the power converter 100 converts the alternating current power of the power grid into the direct current power and inputs the direct current power to the energy storage apparatus 400 in the voltage source mode, if the direct current bus voltage is greater than or equal to the second voltage threshold, it indicates that a power receiving capability of the energy storage apparatus 400 cannot keep up with the charging power input by the power converter 100, and the power converter 100 may first switch to the current source mode to input the first charging power to the energy storage apparatus 400. If the charging power limit of the energy storage apparatus 400 is increased in a period of the current source mode, and the increased charging power limit is greater than or equal to the charging power of the power grid, that is, the increased charging power limit is greater than or equal to the second charging power that needs to be input to the energy storage apparatus 400 after the power converter 100 switches to the voltage source mode, the power converter 100 may resume inputting the second charging power to the energy storage apparatus 400 in the voltage source mode in advance.

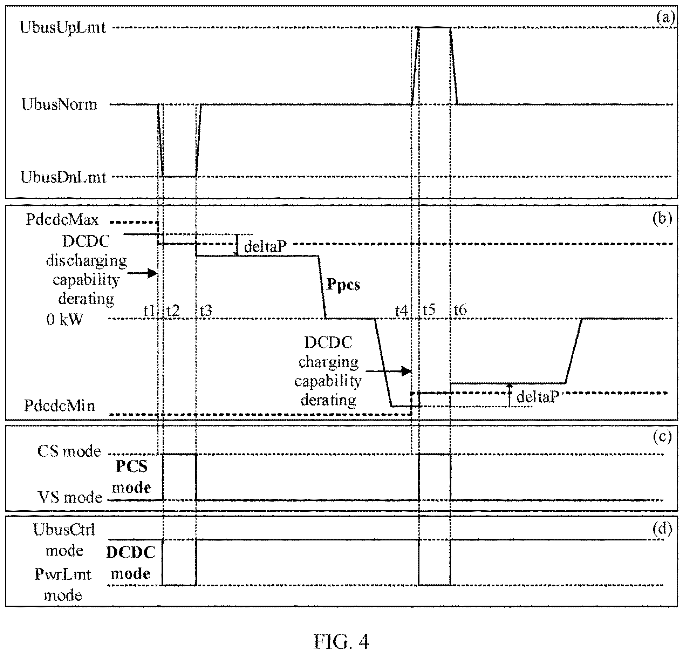

The foregoing process of controlling high and low direct current bus voltage ride through by the power converter 100 based on a charging and discharging capability of the energy storage apparatus 400 is applicable to the two-stage architecture. In the two-stage architecture, the charging and discharging capability of the energy storage apparatus 400 is limited by a charging and discharging capability of the direct current converter 300, and the power converter 100 and the direct current converter 300 may perform cooperative control to implement the high and low direct current bus voltage ride through of the energy storage power supply system. For the specific process, refer to FIG. 4 in the accompanying drawings for this specification. A principle is similar to that in the foregoing embodiment, and details are not described herein again.

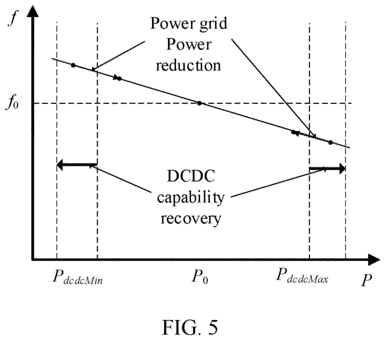

Performing power regulation based on a power scheduling situation of the power grid and performing power regulation based on the capability of the energy storage apparatus 400 or direct current converter 300 of the previous stage to implement the high and low direct current bus voltage ride through, which are described in the foregoing embodiment, are essentially that the output or input power of the power converter 100 is in a capability range that the energy storage apparatus 400 or the direct current converter 300 can match, so that the power of the previous stage and the power of the next stage can be balanced, to ensure the stability of the direct current bus DC Bus voltage. For a principle, refer to FIG. 5 in the accompanying drawings for this specification.

Based on a same technical concept, an embodiment of this application further provides an energy storage power supply system. Refer to FIG. 1(d) and FIG. 1(e) in the accompanying drawings for this specification. The energy storage power supply system includes a power converter 100, an energy storage apparatus 400, and a direct current converter 300 that are similar to those in the foregoing embodiment. The energy storage apparatus 400 is connected to the direct current converter 300. The direct current converter 300 is connected to one end of the power converter 100. The other end of the power converter 100 is connected to a power grid. The power converter 100 may convert a direct current that is output by the energy storage apparatus 400 by using the direct current converter 300 into an alternating current, and output the alternating current to the power grid, or may convert an alternating current that is input by the power grid into a direct current, and input the direct current to the energy storage apparatus 400 by using the direct current converter 300. It should be understood that whether the energy storage power supply system performs charging or discharging is implemented by power scheduling of the power grid and a corresponding response of the energy storage power supply system. When the power scheduling of the power grid does not match a charging and discharging capability of the energy storage power supply system, a bus voltage of the power converter 100 fluctuates. Because the power converter 100 has a capability of coping with fluctuation of the power scheduling of the power grid, the energy storage power supply system may still continue to operate stably when the power scheduling of the power grid fluctuates, and safety of the energy storage apparatus is ensured. A response manner of the power converter 100 to required power of the power grid and charging power of the power grid may be consistent with a response manner of the power converter 100 in the foregoing embodiment. In addition, the direct current converter 300 cooperates with the power converter 100. When the power converter 100 operates in a voltage source mode, the direct current converter 300 operates in a bus voltage control mode UbusCtrl Mode. When the power converter 100 operates in a current source mode, the direct current converter 300 operates in a power limiting mode PwrLmt Mode. For an operating mode of the energy storage power supply system, refer to FIG. 3 and FIG. 4 in the accompanying drawings for this specification. It should be understood that, when an architecture in FIG. 1(e) in the accompanying drawings for this specification is used, a plurality of power converters 100 and a plurality of direct current converters 300 need to simultaneously cope with fluctuation of a direct current bus DC Bus voltage. Therefore, in this scenario, mode switching of the plurality of power converters 100 is simultaneously performed, and similarly, mode switching of the plurality of direct current converters 300 is also simultaneously performed.

Based on a same technical concept, an embodiment of this application further provides a power converter control method. The method may be applied but is not limited to the foregoing power converter 100, and may cope with fluctuation of power scheduling of a power grid.

The method specifically includes the following steps.

In a process in which a power converter converts direct current power of a direct current source (for example, a solar panel or an energy storage apparatus) into alternating current power in a voltage source mode, and outputs the alternating current power to the power grid, if a direct current bus voltage is less than or equal to a first voltage threshold, step S101 is performed.

Step S101: Control the power converter to switch to a current source mode to output first output power to the power grid. The first output power is equal to an output power limit of the direct current source.

In a period of the current source mode, if required power of the power grid decreases to be less than or equal to the output power limit of the direct current source (for example, the solar panel or the energy storage apparatus), step S102 is performed.

Step S102: Control the power converter to resume outputting second output power to the power grid in the voltage source mode. The second output power is less than or equal to the output power limit of the direct current source. Alternatively, the output power of the power converter in the voltage source mode may be further limited, and S1021 is performed.

Step S 1021: Control the power converter to resume outputting the second output power to the power grid in the voltage source mode, and control the second output power to be less than or equal to the output power limit of the direct current source.

In the period of the current source mode, if the output power limit of the direct current source (for example, the solar panel or the energy storage apparatus) is increased, and the increased output power limit is greater than or equal to the required power of the power grid, that is, the increased output power limit is greater than or equal to the second output power that needs to be output after the power converter switches to the voltage source mode, the power converter may alternatively switch to the voltage source mode in advance, and step S102 is directly performed.

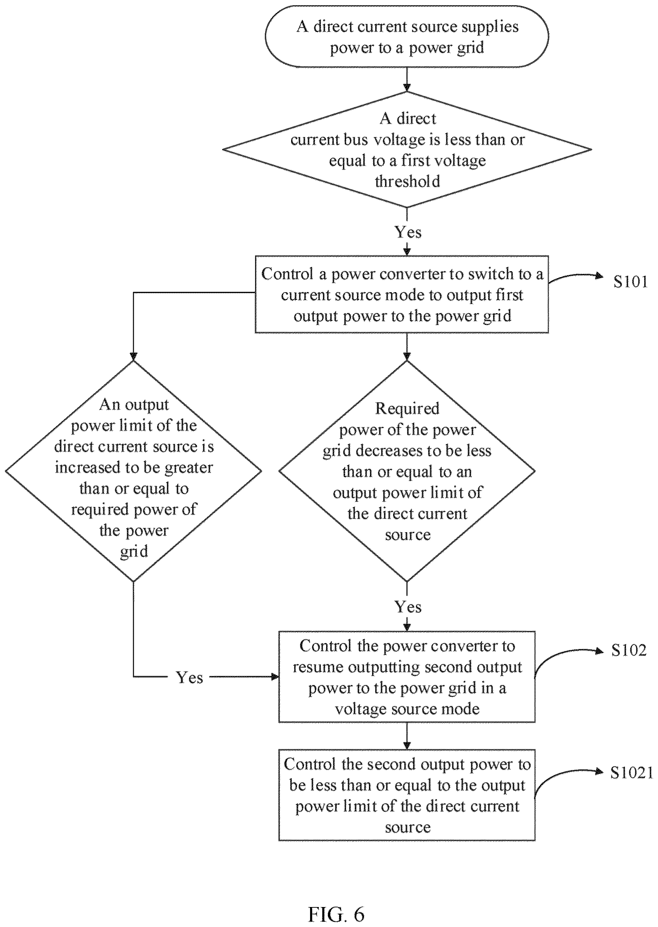

For the foregoing control process, refer to FIG. 6 in the accompanying drawings for this specification.

If it is determined that the direct current source is the energy storage apparatus, there may further be a case in which the power grid charges the energy storage apparatus. In this case, control logic for controlling the power converter may be correspondingly adjusted. In a process in which the power converter converts alternating current power of the power grid into direct current power and inputs the direct current power to the energy storage apparatus in the voltage source mode, if the direct current bus voltage is greater than or equal to a second voltage threshold, step S201 is performed.

Step S201: Control the power converter to input first charging power to the energy storage apparatus in the current source mode.

In the period of the current source mode, if required charging power decreases to be less than or equal to a charging power limit of the energy storage apparatus, step S202 is performed.

Step S202: Control the power converter to resume inputting second charging power to the energy storage apparatus in the voltage source mode.

Alternatively, the charging power input by the power converter to the energy storage apparatus in the voltage source mode may be further limited, and S2021 is performed.

Step S2021: Control the power converter to resume inputting the second charging power to the energy storage apparatus in the voltage source mode, and control the second charging power to be less than or equal to the charging power limit of the energy storage apparatus.

In the period of the current source mode, if a charging power receiving capability of the energy storage apparatus is improved, and an increased charging power limit is greater than or equal to charging power of the power grid, that is, the increased charging power limit is greater than or equal to the second charging power that needs to be input after the power converter switches to the voltage source mode, the power converter may alternatively switch to the voltage source mode in advance, and step S202 is directly performed.

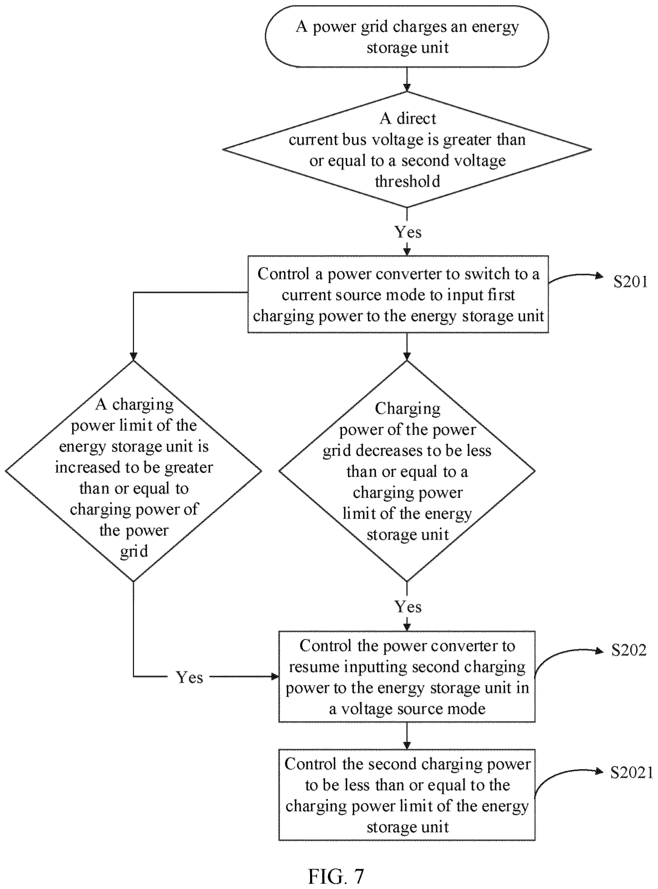

For the foregoing control process, refer to FIG. 7 in the accompanying drawings for this specification.

A principle and an application scenario of the power converter control method are similar to the foregoing control principle and application scenario of the power converter 100. Details are not described herein again.

Embodiments of this application are described in detail above. The principle and implementation of this application are described herein through specific examples. The descriptions about embodiments are only provided to help understand the method and core ideas of this application. In addition, a person of ordinary skill in the art makes variations to the specific implementations and the application scope based on the ideas of this application. Therefore, the content of this specification shall not be construed as a limitation on this application.

## Claims

1. A power converter, wherein
the power converter comprises a DC/AC (direct current/alternating current) conversion unit and a direct current bus, wherein a direct current end of the DC/AC conversion unit is connected to the direct current bus, the direct current bus is configured to be connected to a direct current source, and an alternating current end of the DC/AC conversion unit is configured to be connected to an external system; and
the power converter is configured to: if a direct current bus voltage is less than or equal to a first voltage threshold, output first output power to the external system in a current source mode, wherein the first output power is equal to an output power limit of the direct current source; and after the power converter outputs the first output power to the external system in the current source mode, if a fluctuation amplitude of the direct current bus voltage is less than or equal to a first fluctuation threshold, output second output power to the external system in a voltage source mode, wherein the second output power is less than or equal to the output power limit of the direct current source.

2. The power converter according to claim 1, wherein
the power converter is specifically configured to: after the first output power is output to the external system in the current source mode, if the fluctuation amplitude of the direct current bus voltage is less than or equal to the first fluctuation threshold, and required power of the external system decreases to be less than or equal to the output power limit of the direct current source, output the second output power to the external system in the voltage source mode; or
the power converter is specifically configured to: after the first output power is output to the external system in the current source mode, if the fluctuation amplitude of the direct current bus voltage is less than or equal to the first fluctuation threshold, and the output power limit of the direct current source is increased to be greater than or equal to required power of the external system, output the second output power to the external system in the voltage source mode.

3. The power converter according to claim 1 or 2, wherein
the direct current source is an energy storage apparatus; and
the power converter is configured to: if the direct current bus voltage is greater than or equal to a second voltage threshold, input first charging power to the energy storage apparatus in the current source mode, wherein the first charging power is equal to a charging power limit of the energy storage apparatus; and after the power converter inputs the first charging power to the energy storage apparatus in the current source mode, if the fluctuation amplitude of the direct current bus voltage is less than or equal to a second fluctuation threshold, input second charging power to the energy storage apparatus in the voltage source mode, wherein the second charging power is less than or equal to the charging power limit of the energy storage apparatus.

4. The power converter according to claim 3, wherein
the power converter is specifically configured to: after the first charging power is input to the energy storage apparatus in the current source mode, if the fluctuation amplitude of the direct current bus voltage is less than or equal to the second fluctuation threshold, and charging power of the external system decreases to be less than or equal to the charging power limit of the energy storage apparatus, input the second charging power to the energy storage apparatus in the voltage source mode; or
the power converter is specifically configured to: after the first charging power is input to the energy storage apparatus in the current source mode, if the fluctuation amplitude of the direct current bus voltage is less than or equal to the second fluctuation threshold, and the charging power limit of the energy storage apparatus is increased to be greater than or equal to charging power of the external system, input the second charging power to the energy storage apparatus in the voltage source mode.

5. An energy storage power supply system, comprising:
at least one energy storage apparatus, at least one direct current converter that is correspondingly connected to the energy storage apparatus, and at least one power converter, wherein
a direct current end of the power converter is connected to the direct current converter through a direct current bus, the direct current converter is configured to be connected to the energy storage apparatus, and an alternating current end of the power converter is configured to be connected to an external system; and
the power converter is configured to: if a direct current bus voltage is less than or equal to a first voltage threshold, output first output power to the external system in a current source mode, wherein the first output power is equal to an output power limit of the direct current source; and after the power converter outputs the first output power to the external system in the current source mode, if a fluctuation amplitude of the direct current bus voltage is less than or equal to a first fluctuation threshold, output second output power to the external system in a voltage source mode, wherein the second output power is less than or equal to an output power limit of the energy storage apparatus; or
the power converter is configured to: if a direct current bus voltage is greater than or equal to a second voltage threshold, input first charging power to the energy storage apparatus in a current source mode, wherein the first charging power is equal to a charging power limit of the energy storage apparatus; and after the power converter inputs the first charging power to the energy storage apparatus in the current source mode, if a fluctuation amplitude of the direct current bus voltage is less than or equal to a second fluctuation threshold, input second charging power to the energy storage apparatus in a voltage source mode, wherein the second output power is less than or equal to an charging power limit of the energy storage apparatus.

6. A power output method of a power converter, comprising:
if a direct current bus voltage of a direct current bus that is connected to a direct current input end of a DC/AC (direct current/alternating current) conversion unit of the power converter is less than or equal to a first voltage threshold, outputting first output power to an external system in a current source mode, wherein the first output power is equal to an output power limit of a direct current source that is connected to the power converter; and after the first output power is output to the external system in the current source mode, if a fluctuation amplitude of the direct current bus voltage is less than or equal to a first fluctuation threshold, outputting second output power to the external system in a voltage source mode, wherein the second output power is less than or equal to the charging power limit of the direct current source.

7. The power output method of the power converter according to claim 6, wherein the outputting second output power to the external system in a voltage source mode after the first output power is output to the external system in the current source mode, and if a fluctuation amplitude of the direct current bus voltage is less than or equal to a first fluctuation threshold comprises:
after the first output power is output to the external system in the current source mode, if the fluctuation amplitude of the direct current bus voltage is less than or equal to the first fluctuation threshold, and required power of the external system decreases to be less than or equal to the output power limit of the direct current source, outputting the second output power to the external system in the voltage source mode; or
after the first output power is output to the external system in the current source mode, if the fluctuation amplitude of the direct current bus voltage is less than or equal to the first fluctuation threshold, and the output power limit of the direct current source is increased to be greater than or equal to required power of the external system, outputting the second output power to the external system in the voltage source mode.

8. The power output method of the power converter according to claim 6 or 7, comprising:
if the direct current bus voltage is greater than or equal to a second voltage threshold, inputting, in the current source mode, first charging power to an energy storage apparatus that is connected to the power converter, wherein the first charging power is equal to a charging power limit of the energy storage apparatus; and after the first charging power is input to the energy storage apparatus in the current source mode, if the fluctuation amplitude of the direct current bus voltage is less than or equal to a second fluctuation threshold, inputting second charging power to the energy storage apparatus in the voltage source mode, wherein the second charging power is less than or equal to the charging power limit of the energy storage apparatus.

9. The power output method of the power converter according to claim 8, wherein the inputting second charging power to the energy storage apparatus in the voltage source mode after the first charging power is input to the energy storage apparatus in the current source mode, and if the fluctuation amplitude of the direct current bus voltage is less than or equal to a second fluctuation threshold comprises:
after the first charging power is input to the energy storage apparatus in the current source mode, if the fluctuation amplitude of the direct current bus voltage is less than or equal to the second fluctuation threshold, and charging power of the external system decreases to be less than or equal to the charging power limit of the energy storage apparatus, inputting the second charging power to the energy storage apparatus in the voltage source mode; or
after the first charging power is input to the energy storage apparatus in the current source mode, if the fluctuation amplitude of the direct current bus voltage is less than or equal to the second fluctuation threshold, and the charging power limit of the energy storage apparatus is increased to be greater than or equal to charging power of the external system, inputting the second charging power to the energy storage apparatus in the voltage source mode.
